# EUROPÄISCHE PATENTSCHRIFT

(11) **EP 2 487 063 B1**
(45) Veröffentlichungstag und Bekanntmachung des Hinweises auf die Patenterteilung: **22.02.2023**
(21) Anmeldenummer: 12152635.4
(22) Anmeldetag: 26.01.2012
(51) Int. Cl.: B60L 3/00, H02J 7/00, H02H 3/06, B60L 3/04, B60L 53/14, H02H 3/30, B60L 53/16, B60L 53/31, B60L 53/18, B60L 53/30

(54) **Vorrichtung zum Bereitstellen elektrischer Energie sowie Betriebsverfahren hierfür**
Device for producing electrical energy and method for operating same
Dispositif de préparation d'énergie électrique ainsi que procédé de fonctionnement associé

(30) Priorität: 09.02.2011 DE 102011010770
(43) Veröffentlichungstag der Anmeldung: 15.08.2012
(73) Patentinhaber: Compleo Charging Solutions AG, 44309 Dortmund (DE)
(72) Erfinder: Kachouh, Checrallah, 44227 Dortmund (DE)
(74) Vertreter: Wickord, Wiro

(56) Entgegenhaltungen:
- EP-A2- 1 744 428
- DE-A1- 2 627 506
- DE-A1- 4 213 405
- DE-T2- 69 306 522
- GB-A- 2 468 376
- US-A1- 2010 013 433
- US-A1- 2010 225 475
- US-A1- 2010 301 809
- Doepke Schaltgeräte Gmbh & Co. Kg: "Doepke DFA/DFA-DI Fernantrieb mit Intelligenz", , 22. September 2003 (2003-09-22), Seiten 1-4, XP055193566, Gefunden im Internet: URL:http://web.archive.org/web/20030922101 756/http://doepke.de/dupline/deutsch/prosp ekte/pdf/dfa.pdf [gefunden am 2015-06-03]

## Beschreibung

Die Erfindung betrifft eine Vorrichtung zum Bereitstellen elektrischer Energie für elektrisch betreibbare Fahrzeuge nach dem Oberbegriff des Patentanspruchs 1.

Die Erfindung betrifft ferner ein Verfahren zum Betrieb einer elektrische Energie für elektrisch betreibbare Fahrzeuge bereitstellenden Ladestation nach dem Oberbegriff des Patentanspruchs 7.

Heute am Markt verfügbare Ladestationen zur Bereitstellung elektrischer Energie für elektrisch betreibbare Fahrzeuge besitzen üblicherweise mindestens ein Steckelement, welches in einem Gehäuse der Ladestation angeordnet ist und über ein Ladekabel mit einem elektrischen Energiespeicher des Fahrzeugs verbunden werden kann. Das Steckelement ist über eine Anschlussleitung der Ladestation mit einer externen Versorgungsleitung verbunden. Um in einem Fehlerfall die Stromzufuhr zu dem Steckelement zu unterbrechen, ist der Anschlussleitung ein Schutzschaltelement zugeordnet. Das Schutzschaltelement, welches insbesondere als ein FI-Schutzschalter oder als ein residual current device (RCD) ausgebildet sein kann, arbeitet üblicherweise als ein Differenzstrommesser und detektiert Fehlerströme, die beispielsweise über einen menschlichen Körper oder eine schadhafte Isolierung fließen und die Sicherheit der Ladestation beeinflussen. Zusätzlich ist der Anschlussleitung zwischen dem Schutzschaltelement und dem Steckelement ein weiteres Schaltelement zugeordnet. Das weitere Schaltelement, welches beispielsweise als ein Schütz ausgebildet ist, dient zum Ein- und Ausschalten der Ladespannung, das heißt zum Bestromen des Steckelements.

Sofern von dem Schutzschaltelement ein Fehlerstrom detektiert wird, gelangt das Schutzschaltelement selbsttätig aus einer Überwachungsschaltstellung in eine Unterbrechungsschaltstellung, in der die Stromzufuhr zu dem Steckelement unterbrochen ist. Durch die Unterbrechung der Anschlussleitung ist das Steckelement spannungsfrei. Ein eventuell durchgeführter Ladevorgang wird abgebrochen und die Ladestation steht bis auf Weiteres Nutzern nicht zur Verfügung. Um die Ladestation nach einem Ausfall wieder in Betrieb zu nehmen, muss ein Servicetechniker die Ladestation vor Ort überprüfen und das Schutzschaltelement manuell in die Überwachungsschaltstellung zurückverbringen. Hierdurch bedingt kann es zu langen Ausfallzeiten der Ladestation und zu erheblichen Servicekosten kommen.

Typische Ladestationen sind beispielsweise in den Offenlegungsschriften DE 42 13 405 A1 und US 2010/013433 A1 sowie in der Patentschrift DE 693 06 522 T2 offenbart.

Aufgabe der nachfolgenden Erfindung ist es daher, eine Ladestation derart weiterzubilden, dass eine automatisierte Wiederinbetriebnahme der Ladestation nach einem Fehlerfall möglich wird. Ferner ist es Aufgabe der Erfindung, ein Verfahren zum Betrieb der modifizierten Ladestation anzugeben.

Zur Lösung der Aufgabe weist die Erfindung die Merkmale des Patentanspruchs 1 auf.

Der besondere Vorteil der Erfindung besteht darin, dass durch die automatisierte Wiederinbetriebnahme der Ladestation nach einem durch das Schutzschaltelement detektierten Fehlerfall auf die vergleichsweise teure Wiederinbetriebnahme durch einen Servicetechniker verzichtet werden kann. Überdies kann die Ladestation vergleichsweise schnell wieder in Betrieb genommen werden, da die Anfahrtszeiten für den Servicetechniker entfallen.

Grundsätzlich ist es nicht zulässig, ein Schutzschaltelement automatisiert, beispielsweise durch ein elektromagnetisches Betätigungselement, von der Unterbrechungsschaltstellung in die Überwachungsschaltstellung zurückzuverbringen. Stattdessen sollen die durch das Schutzschaltelement überwachte Leitung von einem Fachmann geprüft und Gefahren beseitigt werden. Eine Ausnahme von diesem Grundsatz existiert für geschlossene technische Systeme, in denen aufgrund ihrer Abgeschlossenheit eine Gefährdung für das Leib und Leben von Menschen ausgeschlossen werden kann. Vorliegend kann die Ladestation ein derart geschlossenes System bilden. Das Gehäuse schließt die Ladestation nach außen ab. Um das Steckelement der Ladestation mit dem Energiespeicher des Fahrzeugs zu verbinden, weist das Gehäuse eine Ausnehmung auf, durch die hindurch ein Gegensteckelement eines Ladekabels in das Steckelement eingesetzt werden kann. Die Ausnehmung kann durch ein Verschlusselement verschlossen werden, so dass das Steckelement und alle weiteren Funktionskomponenten der Ladestation in einer Schließstellung des Verschlusselements unzugänglich in dem Gehäuse angeordnet sind. Die Ladestation ist dann als geschlossenes System ausgebildet mit der Folge, dass das Schutzschaltelement nicht zwingend manuell, sondern automatisiert von der Unterbrechungsschaltstellung in die Überwachungsschaltstellung verbracht werden kann.

Nach einer bevorzugten Ausführungsform der Erfindung ist das Verschlusselement als ein manuell betätigbares Verschlusselement ausgebildet bzw. in der Schließstellung verriegelbar. Vorteilhaft kann ein manuell betätigbares Verschlusselement auch beim Ausfall der elektrischen Versorgungsenergie im Fehlerfall von der Öffnungsstellung desselben in die Schließstellung verbracht werden. Beispielsweise kann ein Nutzer das Gegensteckelement aus dem Steckelement entnehmen und das Verschlusselement in die Schließstellung verbringen. Beispielsweise kann die Schließstellung als eine Vorzugsstellung des Verschlusselementes ausgebildet sein. Das Verschlusselement kann dann beispielsweise federbetätigt in die Schließstellung verbracht werden.

Indem das Verschlusselement in der Schließstellung mittels einer Verriegelungseinheit festlegbar ist, kann verhindert werden, dass das Verschlusselement während der Wiederinbetriebnahme der Ladestation geöffnet wird. Durch das Verriegeln des Verschlusselements in der Schließstellung ist demzufolge gewährleistet, dass die Ladestation während der gesamten Wiederinbetriebnahme als ein geschlossenes System ausgebildet ist. Eine Unterbrechung der Wiederinbetriebnahme, welche bei einem manuellen Öffnen des Verschlusselements aus Sicherheitsgründen zwingend wäre, kann unterbleiben. Nach einer Weiterbildung der Erfindung ist das Verschlusselement als ein motorisch betätigbares Verschlusselement ausgebildet. Vorteilhaft verbessert sich der Bedienkomfort, wenn das Verschlusselement automatisiert mittels einer Antriebseinheit von Schließstellung in die Öffnungsstellung und zurück verbracht wird. Darüber hinaus kann beim Vorsehen eines motorisch betätigbaren Verschlusselements sichergestellt werden, dass das Verschlusselement nicht manuell in die Öffnungsstellung verbracht und dadurch eine etwaige Wiederinbetriebnahme der Ladestation von außen unterbrochen wird. Eine derartige Unterbrechung der Wiederinbetriebnahme der Ladestation ist vorzusehen, wenn das Verschlusselement während der Wiederinbetriebnahme der Ladestation in die Öffnungsstellung verbracht und demzufolge das Steckelement durch die Ausnehmung des Gehäuses frei zugänglich ist. In diesem Fall ist die Ladestation nicht mehr als geschlossenes System ausgebildet und die automatisierte Wiederinbetriebnahme nicht zulässig.

Nach einer Weiterbildung der Erfindung ist das weitere Schaltelement der Anschlussleitung zwischen dem Steckelement und dem Schutzschaltelement zugeordnet. Vorteilhaft ist durch diese Anordnung gewährleistet, dass auch ein Fehlerfall an dem weiteren Schaltelement zum Auslösen des Schutzschaltelements und zur Trennung von der Versorgungsleitung führt.

Zur Lösung der Aufgabe weist das erfindungsgemäße Verfahren die Merkmale des Patentanspruchs 7 auf.

Der besondere Vorteil der Erfindung besteht darin, dass die automatisierte Wiederinbetriebnahme der Ladestation nach einem Fehlerfall nur durchgeführt wird, wenn das Verschlusselement in seiner Schließstellung angeordnet und die Ladestation demzufolge als geschlossenes System ausgebildet ist. Befindet sich das Verschlusselement in der Öffnungsstellung oder in einer beliebigen Zwischenstellung, wird der Vorgang der automatisierten Wiederherstellung der Betriebsbereitschaft entweder nicht gestartet oder unterbrochen. Demzufolge ist zu jedem Zeitpunkt die Sicherheit des Systems gewährleistet.

Grundsätzlich können das weitere Schaltelement und das Schutzschaltelement in einer beliebigen Reihenfolge betätigt werden. Beispielsweise kann zunächst das Schutzschaltelement in die Überwachungsschaltstellung und dann das weitere Schaltelement in die Einschaltstellung verbracht werden. Sofern durch das Entfernen des Gegensteckelements der Fehler behoben ist, verbleibt das Schutzschaltelement nach dem Einschalten des weiteren Schaltelements in der Überwachungsschaltstellung, und das weitere Schaltelement kann in die Ausschaltstellung zurückverbracht werden. Andernfalls gelangt das Schutzschaltelement selbsttätig zurück in die Unterbrechungsschaltstellung.

Nach einer bevorzugten Ausführungsform der Erfindung wird zunächst das weitere Schaltelement eingeschaltet und dann das Schutzschaltelement in die Überwachungsschaltstellung verbracht. Vorteilhaft ist hierdurch sichergestellt, dass die Anschlussleitung über ihre gesamte Länge, das heißt bis zum Steckelement, geprüft wird. Andernfalls könnte ein zwischen dem weiteren Schaltelement und dem Steckelement aufgetretener Fehler nicht detektiert werden. Zudem wird ein unerwünschter Betriebszustand vermieden, der auftreten kann, wenn es während des Wiedereinschaltens zu einem Stromausfall kommt. Dies kann der Fall sein, wenn sich das Schutzschaltelement in der Überwachungsschaltstellung befindet, ohne dass das weitere Schaltelement in die Einschaltstellung verbracht ist.

Nach einer Weiterbildung der Erfindung wird das Schutzschaltelement mittels einer Betätigungseinheit von einer Unterbrechungsschaltstellung in die Überwachungsschaltstellung verbracht. Die Wiederinbetriebnahme erfolgt automatisiert. Die Betätigungseinheit ist als eine elektrische oder als eine elektromagnetische Betätigungseinheit ausgebildet.

Nach einer Weiterbildung des erfindungsgemäßen Verfahrens wird die Schließstellung des Verschlusselements sensorisch erfasst und ein die Schließstellung kennzeichnendes Sensorsignal einer Betätigungseinheit ansteuernden Steuereinheit zugeführt. Zur sensorischen Überwachung des Verschlusselements kann eine Detektoreinheit beispielsweise einen optischen Sensor, einen Näherungssensor bzw. einen berührungssensitiven Sensor (z.B. Mikroschalter) aufweisen. Selbstverständlich können mehr als ein Sensor sowie Sensoren, welche nach unterschiedlichen Messprinzipien arbeiten, vorgesehen sein zur Erfassung der Schließstellung des Verschlusselements.

Nach einer Weiterbildung der Erfindung wird die Ladestation als Ganze oder das dem Schutzschaltelement zugeordnete Steckelement außer Betrieb gesetzt, sofern das Schutzschaltelement nach dem Verbringen desselben von der Unterbrechungsschaltstellung in die Überwachungsschaltstellung nicht in der Überwachungsschaltstellung verbleibt. Vorteilhaft wird hierdurch ein besonders hohes Maß an Sicherheit speziell für den Fall erreicht, dass die Wiederinbetriebnahme der Ladestation fehlschlägt und der Fehler nicht behoben scheint.

Ein einzelnes Steckelement einer Ladestation wird insbesondere dann außer Betrieb gesetzt, wenn die Ladestation weitere Steckelemente aufweist und diese weiteren Steckelemente einwandfrei arbeiten. Sofern lediglich ein Steckelement vorgesehen ist, kann statt einer Außerbetriebnahme des Steckelement auch die ganze Ladestation außer Betrieb genommen werden. Die Außerbetriebnahme kann so ausgestaltet sein, dass dem Nutzer der Zugriff auf das Steckelement nicht möglich ist, weil das Steckelement beispielsweise unzugänglich in der Ladestation oder hinter dem verriegelten Verschlusselement angeordnet ist. Allgemein soll hierbei eine bestimmungsgemäße Nutzung des Ladepunkts (Ladestation oder Steckelement) und eine Gefährdung der Nutzer verhindert werden.

Weitere Vorteile der Erfindung ergeben sich aus den weiteren Unteransprüchen.

Die Erfindung wird nachfolgend anhand von Zeichnungen näher erläutert.

Es zeigen:
- Figur 1: eine Prinzipdarstellung einer erfindungsgemäßen Ladestation und
- Figur 2: ein Verfahrensbeispiel für das erfindungsgemäße Verfahren.

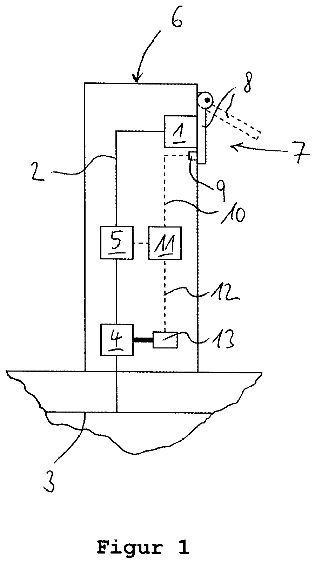

Eine Ladestation nach Figur 1 stellt elektrische Energie für elektrisch betreibbare Fahrzeuge bereit. Derartige Ladestationen werden beispielsweise auf öffentlichen Parkplätzen bereitgestellt. Die Ladestation weist als wesentliche Komponenten ein Steckelement 1, eine Anschlussleitung 2 zur Verbindung des Steckelements 1 mit einer öffentlichen externen Versorgungsleitung 3, ein beispielsweise als ein FI-Schutzschalter oder als ein RCD ausgebildetes Schutzschaltelement 4 zur Detektion eines elektrischen Fehlerstroms sowie ein beispielsweise als ein Schütz ausgebildetes weiteres Schaltelement 5 auf. Das Schutzschaltelement 4 und das weitere Schaltelement 5 sind der Anschlussleitung 2 zugeordnet, wobei das weitere Schaltelement 5 zwischen dem Steckelement 1 und dem Schutzschaltelement 4 vorgesehen ist. Das Steckelement 1, die Anschlussleitung 2, das Schutzschaltelement 4 sowie das weitere Schaltelement 5 sind in einem Gehäuse 6 der Ladestation verbaut. Das Gehäuse 6 weist eine Ausnehmung 7 sowie ein Verschlusselement 8 auf. Das Verschlusselement 8 ist der Ausnehmung 7 derart zugeordnet, dass die Ausnehmung 7 in einer Schließstellung des Verschlusselements 8 vollständig verschlossen und in einer Öffnungsstellung des Verschlusselements 8 geöffnet ist. In der Öffnungsstellung des Verschlusselements 8 ist das der Ausnehmung 7 zugeordnete Steckelement 1 durch die Ausnehmung 7 hindurch zugänglich in dem Gehäuse 6 angeordnet. Insbesondere kann in der Öffnungsstellung des Verschlusselements 8 ein Gegensteckelement in das Steckelement 1 eingesetzt werden zur Verbindung eines Energiespeichers des elektrisch betätigbaren Fahrzeugs mit der Ladestation. In der Schließstellung des Verschlusselements 8 ist das Steckelement 1 unzugänglich in dem Gehäuse 6 angeordnet. Die Ladestation ist dann als ein geschlossenes System ausgebildet.

Zur Detektion der Schließstellung des Verschlusselements 8 ist eine Detektoreinheit 9 vorgesehen, die dem Steckelement 1 zugeordnet ist. Die Detektoreinheit 9 weist beispielsweise einen Sensor, insbesondere einen optischen Sensor, einen Näherungssensor oder einen berührungssensitiven Sensor (Mikroschalter oder dergleichen) auf. Die Detektoreinheit 9 wird über eine Datenleitung 10 mit einer Steuereinheit 11 verbunden. Die Steuereinheit 11 wirkt über eine weitere Datenleitung 12 mit einer Betätigungseinheit 13 zusammen. Die Betätigungseinheit 13 ist dem Schutzschaltelement 4 zugeordnet und dient dazu, dass Schutzschaltelement 4 automatisiert von einer Unterbrechungsschaltstellung, in der die Anschlussleitung 2 durchtrennt und das Steckelement 1 nicht mit der externen Versorgungsleitung 3 verbunden ist, in eine Überwachungsschaltstellung zu verbringen. In der Überwachungsschaltstellung kann mittels des Schutzschaltelements 4 ein Fehlerstrom in der Anschlussleitung 2 detektiert werden. Tritt ein Fehlerstrom auf, wird das Schutzschaltelement 4 selbsttätig von der Überwachungsschaltstellung in die Unterbrechungsschaltstellung verbracht. Hierzu dient beispielsweise ein interner Energiespeicher, der es erlaubt, das Schutzschaltelement 4 einmalig zu betätigen.

Nach dem dargestellten Ausführungsbeispiel der Erfindung ist die Steuereinheit 11 als eine zentrale Steuereinheit ausgebildet. Die Steuereinheit 11 dient nach diesem Ausführungsbeispiel auch dazu, das weitere Schaltelement 5 zu betätigen und die Ladespannung ein- bzw. auszuschalten.

Nach einer alternativen Ausführungsform der Erfindung kann statt einer zentralen Steuereinheit 11 eine dezentrale Steuereinrichtung mit einer Mehrzahl von Steuereinheiten vorgesehen sein zur Steuerung der Ladestation.

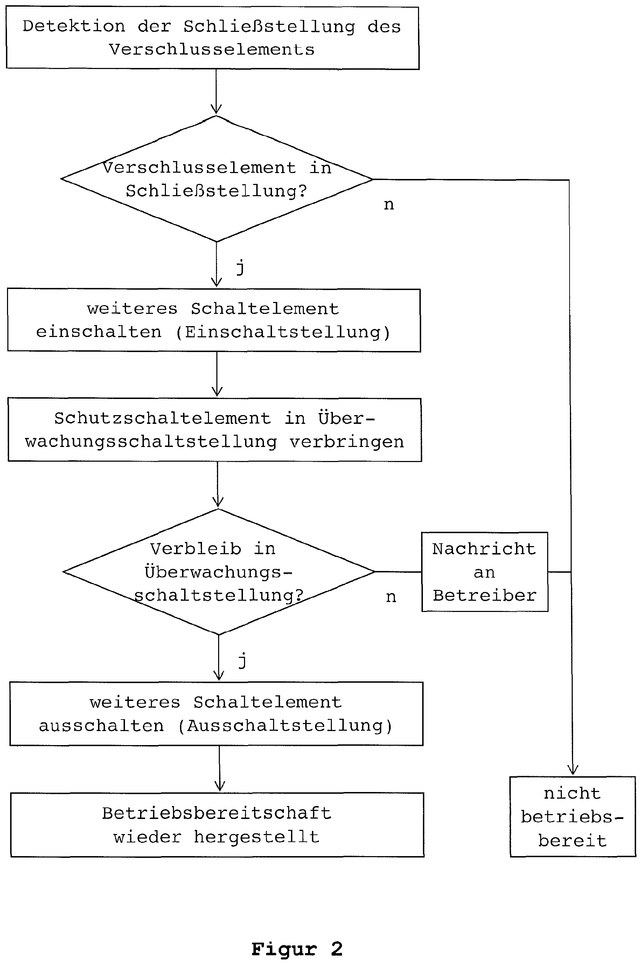

Figur 2 zeigt einen Verfahrensablauf zur Wiederinbetriebnahme der Ladestation nach einem Fehlerfall. Beispielsweise kann es während eines Ladevorgangs zu einem Fehler kommen, der dazu führt, dass das Schutzschaltelement 4 aus der Überwachungsschaltstellung in die Unterbrechungsschaltstellung gelangt. In diesem Fall wird der Ladestrom unterbrochen und der Ladevorgang ausgesetzt. Sobald das Gegensteckelement aus dem Steckelement 1 entnommen ist, kann das Verschlusselement 8 in die Schließstellung schwenken. Nun wird von der Steuereinheit 11 zunächst das weitere Schaltelement 5 in die Einschaltstellung verbracht. Anschließend wird das Schutzschaltelement 4 in die Überwachungsschaltstellung verbracht. Sofern das Schutzschaltelement 4 in der Überwachungsschaltstellung verbleibt, ist der detektierte Fehlerfall durch das Entfernen des Gegensteckelements aus dem Steckelement 1 aufgehoben worden. Das weitere Schaltelement 5 wird aus der Einschaltstellung in die Ausschaltstellung verbracht. Das Steckelement 1 ist spannungsfrei geschaltet und die Betriebsbereitschaft der Ladestation wieder hergestellt.

So lange das Verschlusselement 8 sich nicht in der Schließstellung befindet, ist das Steckelement 1 durch die Ausnehmung 7 zugänglich in dem Gehäuse 6 angeordnet. Die Ladestation bildet kein geschlossenes System mit der Folge, dass eine automatisierte Wiederinbetriebnahme der Ladestation unzulässig ist. Die Ladestation verbleibt in einem nicht betriebsbereiten Zustand.

Ebenfalls verbleibt die Ladestation in einem nicht betriebsbereiten Zustand, wenn das Schutzschaltelement 4 nach Verbringung desselben in die Überwachungsschaltstellung wieder auslöst, das heißt selbsttätig in die Unterbrechungsschaltstellung gelangt. In diesem Fall ist der zu der Unterbrechung des Ladevorgangs führende Fehler nicht behoben. Die Ladestation kann nicht wieder in Betrieb genommen werden. In der Regel wird es erforderlich sein, den Fehlerzustand der Ladestation durch einen Servicetechniker vor Ort prüfen zu lassen. Schlägt die Wiederherstellung der Betriebsbereitschaft der Ladestation fehl, kann eine entsprechende Benachrichtigung an einen Betreiber der Ladestation bzw. einen Servicepartner gesendet werden. Weiterhin kann der nichtbetriebsbereite Zustand der Ladestation an der Ladestation selbst angezeigt werden. Potentielle Nutzer sind dann über den Ausfall informiert und können für den Ladevorgang eine andere Ladestation wählen.

Lediglich exemplarisch ist eine Ladestation mit einem einzigen Steckelement 1 dargestellt worden. Selbstverständlich können zwei oder mehr Steckelemente 1 in einer einzigen Ladestation angeordnet werden. Die Steckelemente 1 werden dann vorzugsweise über separate Anschlussleitungen 2 an die externe Versorgungsleitung 3 angeschlossen. Jedem Steckelement 1 ist hierbei ein eigener Schütz (weiteres Schaltelement 5) zugeordnet. Das Schutzschaltelement 4 kann als ein zentrales Schutzschaltelement zur Überwachung aller Anschlussleitungen 2 ausgebildet sein. Beispielsweise kann jedem Steckelement 1 ein eigenes Schutzschaltelement 4 zugeordnet sein.

Das Verschlusselement 8 ist lediglich exemplarisch als ein Klappverschluss ausgebildet. Das Verschlusselement 8 kann beispielsweise als ein Rosetten- bzw. irisförmiges Verschlusselement oder als ein Schieber ausgebildet sein. Insbesondere kann vorgesehen sein, dass das Steckelement 1 verschiebbar in dem Gehäuse 6 gelagert ist, wobei in einer Bereitstellungsposition des Steckelements 1 ein Gegensteckelement des Ladekabels durch die Ausnehmung 7 des Gehäuses 6 in das Steckelement 1 einsetzbar ist und wobei in einer Nichtbereitstellungsposition das Steckelement 1 unzugänglich in dem Gehäuse 6 angeordnet ist. Das Verschlusselement 8 kann in seiner Bewegung an die Bewegung des Steckelements 1 gekoppelt sein mit der Folge, dass das Verschlusselement 8 die Ausnehmung 7 in der Nichtbereitstellungsposition des Steckelements 1 verschließt. Demzufolge nimmt das Verschlusselement 8 die Schließstellung ein, wenn das Steckelement 1 in seiner Nichtbereitsstellungsposition ist. In der Bereitstellungsposition des Steckelements 1 ist das Verschlusselement 8 in der Öffnungsstellung angeordnet.

Optional kann dem Steckelement 1 ein nicht dargestellter Hilfskontakt zugeordnet sein, der der Steuereinheit 11 anzeigt, ob ein Gegensteckelement in das Steckelement 1 eingesteckt ist.

Als Fahrzeuge im Sinne der Erfindung gelten alle Automobile (PKW, LKW, Wohnmobile, Zweiräder usw.), Schienenfahrzeuge (insbesondere Lokomotiven), Wasserfahrzeuge (Schiffe), Luftfahrzeuge sowie Anhänger (Wohnanhänger, mobile Verkaufsstände usw.).

## Patentansprüche

1. Vorrichtung zum Bereitstellen elektrischer Energie für elektrisch betreibbare Fahrzeuge mit einem über ein Ladekabel mit einem Energiespeicher des Fahrzeugs verbindbaren Steckelement (1), mit einer das Steckelement (1) und eine externe Versorgungsleitung (3) verbindenden Anschlussleitung (2), mit einem der Anschlussleitung (2) zugeordneten Schutzschaltelement (4), wobei in einer Überwachungsschaltstellung des Schutzschaltelements (4) das Auftreten eines Fehlerstromes in der Anschlussleitung (2) detektierbar ist und wobei in einer Unterbrechungsschaltstellung desselben die Anschlussleitung (2) getrennt ist, mit einem der Anschlussleitung (2) zugeordneten weiteren Schaltelement (5), wobei in einer Einschaltstellung des weiteren Schaltelements (5) an dem Steckelement (1) eine Ladespannung anliegt und wobei in einer Ausschaltstellung des weiteren Schaltelements (5) das Steckelement (1) spannungsfrei ist, mit einem Gehäuse (6), welches das Steckelement (1), die Anschlussleitung (2), das Schutzschaltelement (4) und das weitere Schaltelement (5) zumindest abschnittsweise umgibt und welches eine Ausnehmung (7) und ein der Ausnehmung (7) zugeordnetes Verschlusselement (8) aufweist, wobei das Verschlusselement (8) die Ausnehmung (7) in einer Schließstellung derart vollständig verschließt, dass das Steckelement (1) unzugänglich in dem Gehäuse (6) angeordnet ist, wobei dem Verschlusselement (8) eine Detektoreinheit (9) zugeordnet ist zur Detektion der Schließstellung des Verschlusselements (8), und wobei in einer Öffnungsstellung des Verschlusselements (8) das Steckelement (1) durch die Ausnehmung (7) zugänglich in dem Gehäuse (6) angeordnet ist, **dadurch gekennzeichnet, dass** dem Schutzschaltelement (4) eine elektrische Betätigungseinheit (13) zugeordnet ist zur Verbringung des Schutzschaltelements (4) in die Überwachungsschaltstellung, dass eine datentechnisch mit der Detektoreinheit (9), mit der elektrischen Betätigungseinheit (13) und mit dem weiteren Schaltelement (5) zusammenwirkende Steuereinheit (11) vorgesehen ist, wobei die Steuereinheit (11) über eine Datenleitung (10) mit der Detektoreinheit (9) verbunden ist und über eine weitere Datenleitung (12) mit der Betätigungseinheit (13) zusammenwirkt zur Betätigung des Schutzschaltelements (4), und dass die Vorrichtung eingerichtet ist zur Durchführung eines Verfahrens nach einem der Ansprüche 7 bis 11.

2. Vorrichtung nach Anspruch 1, **dadurch gekennzeichnet, dass** das Verschlusselement (8) als ein manuell betätigbares Verschlusselement (8) ausgebildet ist und/oder dass das Verschlusselement (8) in der Schließstellung mittels einer Verriegelungseinheit festlegbar ist.

3. Vorrichtung nach Anspruch 1 oder 2, **dadurch gekennzeichnet, dass** das Verschlusselement (8) als ein motorisch betätigbares Verschlusselement (8) ausgebildet ist.

4. Vorrichtung nach einem der Ansprüche 1 bis 3, **dadurch gekennzeichnet, dass** das Steckelement (1) verschiebbar in dem Gehäuse (6) gelagert und eine Bewegung des Steckelements (1) derart mit einer Bewegung des Verschlusselements (8) gekoppelt ist, dass in einer Bereitstellungsposition des Steckelements (1) ein Gegensteckelement des Ladekabels durch die Ausnehmung (7) des Gehäuses (6) in das Steckelement (1) einsetzbar ist, und dass in einer Nichtbereitstellungsposition des Steckelements das Steckelement (1) unzugänglich in dem Gehäuse (6) angeordnet und die Ausnehmung (7) durch das Verschlusselement (8) verschlossen ist.

5. Vorrichtung nach einem der Ansprüche 1 bis 4, **dadurch gekennzeichnet, dass** die Detektoreinheit (9) einen optischen Sensor und/oder einen Näherungssensor und/oder einen berührungssensitiven Sensor aufweist.

6. Vorrichtung nach einem der Ansprüche 1 bis 5, **dadurch gekennzeichnet, dass** das weitere Schaltelement (5) der Anschlussleitung (2) zwischen dem Steckelement (1) und dem Schutzschaltelement (4) zugeordnet ist.

7. Verfahren zur automatischen Wiederinbetriebnahme einer elektrische Energie für elektrisch betreibbare Fahrzeuge bereitstellenden Ladestation mit einem über ein Ladekabel mit einem Energiespeicher des Fahrzeugs verbindbaren Steckelement (1), wobei ein Gegensteckelement des Ladekabels in einer Öffnungsstellung eines dem Steckelement (1) zugeordneten Verschlusselements (8) in das Steckelement (1) einsetzbar ist und wobei das Steckelement (1) in einer Schließstellung des Verschlusselements (8) unzugänglich in einem Gehäuse (6) der Ladestation angeordnet ist, mit einem das Steckelement (1) und eine Versorgungsleitung (3) verbindende Anschlussleitung (2), mit einem der Anschlussleitung (2) zugeordneten Schutzschaltelement (4), welches in einer Überwachungsschaltstellung desselben einen Fehlerstrom in der Anschlussleitung (2) detektiert und welches in einer Unterbrechungsschaltstellung die Anschlussleitung (2) trennt, und mit einem der Anschlussleitung (2) zugeordneten weiteren Schaltelement (5), wobei in einer Einschaltstellung des weiteren Schaltelements (5) an dem Steckelement (1) eine Ladespannung anliegt und wobei in einer Ausschaltstellung des weiteren Schaltelements (5) das Steckelement (1) spannungsfrei ist, **dadurch gekennzeichnet, dass** zunächst das Gegensteckelement aus dem Steckelement (1) entnommen und dann die automatische Wiederinbetriebnahme durchgeführt wird, dass zur automatischen Wiederherstellung der Betriebsbereitschaft der Ladestation nach einem Fehlerfall in der Schließstellung des Verschlusselements (8) das weitere Schaltelement (5) von der Ausschaltstellung desselben in die Einschaltstellung verbracht wird, dass das Schutzschaltelement (4) mittels einer Betätigungseinheit (13) von der Unterbrechungsschaltstellung in die Überwachungsschaltstellung verbracht wird und dass, sofern das Schutzschaltelement (4) in der Überwachungsschaltstellung verbleibt, dann das weitere Schaltelement (5) in die Ausschaltstellung verbracht wird.

8. Verfahren nach Anspruch 7, **dadurch gekennzeichnet, dass** zunächst das weitere Schaltelement (5) von der Ausschaltstellung desselben in die Einschaltstellung verbracht wird und dass dann das Schutzschaltelement (4) von der Unterbrechungsschaltstellung in die Überwachungsschaltstellung verbracht wird.

9. Verfahren nach Anspruch 7 oder 8, **dadurch gekennzeichnet, dass** die Schließstellung des Verschlusselements (8) sensorisch erfasst und ein die Schließstellung kennzeichnendes Sensorsignal einer die Betätigungseinheit (13) ansteuernden Steuereinheit (11) zugeführt wird.

10. Verfahren nach einem der Ansprüche 7 bis 9, **dadurch gekennzeichnet, dass** eine Nachricht über die gescheiterte Wiederinbetriebnahme an einen Betreiber der Ladestation gesendet oder der Ausfall der Ladestation an der Ladestation selbst angezeigt wird, sofern das Schutzschaltelement (4) nach der Verbringung desselben von der Unterbrechungsschaltstellung in die Überwachungsschaltstellung nicht in der Überwachungsschaltstellung verbleibt.

11. Verfahren nach einem der Ansprüche 7 bis 10, **dadurch gekennzeichnet, dass** die Ladestation oder ein dem Schutzschaltelement (4) zugeordnetes Steckelement (1) außer Betrieb gesetzt wird, sofern das Schutzschaltelement (4) nach dem Verbringen desselben von der Unterbrechungsschaltstellung in die Überwachungsschaltstellung nicht in der Überwachungsschaltstellung verbleibt.

## Claims

1. Device for supplying electrical energy for electrically operable vehicles, comprising a plug element (1) connectable to an energy store of the vehicle via a charging cable, comprising a connecting line (2) connecting the plug element (1) and an external supply line (3), comprising a safety switch element (4) assigned to the connecting line (2), the occurrence of a fault current in the connecting line (2) being detectable in a monitoring switch state of the safety switch element (4), and the connecting line (2) being disconnected in an interrupting switch state of said element, comprising a further switch element (5) assigned to the connecting line (2), a charging voltage being applied to the plug element (1) in an on state of the further switch element (5) and the plug element (1) being potential-free in an off state of the further switch element (5), comprising a housing (6) which encloses the plug element (1), the connecting line (2), the safety switch element (4) and the further switch element (5) at least in portions and which has a clearance (7) and a locking element (8) assigned to the clearance (7), the locking element (8) fully locking the clearance (7) in a closed position in such a way that the plug element (1) is arranged inaccessibly in the housing (6), a detector unit (9) being assigned to the locking element (8) to detect the closed position of the locking element (8), and the plug element (1) being arranged accessibly in the housing (6) through the clearance (7) in an open position of the locking element (8), **characterised in that** an electrical actuation unit (13) is assigned to the safety switch element (4) to bring the safety switch element (4) into the monitoring switch state, **in that** a control unit (11) is provided which cooperates with the detector unit (9), with the electrical actuation unit (13) and with the further switch element (5) in terms of data, the control unit (11) being connected to the detector unit (9) via a data line (10) and cooperating with the actuation unit (13) via a further data line (12) to actuate the safety switch element (4), and **in that** the device is set up to perform a method according to any of claims 7 to 11.

2. Device according to claim 1, **characterised in that** the locking element (8) is formed as a manually actuable locking element (8) and/or **in that** the locking element (8) can be fixed by means of a latching unit in the closed position.

3. Device according to either claim 1 or claim 2, **characterised in that** the locking element (8) is formed as a motor-actuable locking element (8).

4. Device according to any of claims 1 to 3, **characterised in that** the plug element (1) is mounted displaceably in the housing (6), and a movement of the plug element (1) is coupled to a movement of the locking element (8) in such a way that, in a supply position of the plug element (1), a mating plug element of the charging cable is insertable into the plug element (1) through the clearance (7) in the housing (6), and that, in a non-supply position of the plug element, the plug element (1) is arranged inaccessibly in the housing (6), and the clearance (7) is locked by the locking element (8).

5. Device according to any of claims 1 to 4, **characterised in that** the detector unit (9) has an optical sensor and/or a proximity sensor and/or a touch-sensitive sensor.

6. Device according to any of claims 1 to 5, **characterised in that** the further switch element (5) of the connecting line (2) is assigned between the plug element (1) and the safety switch element (4).

7. Method for automatically restarting a charging station which supplies electrical energy for electrically operable vehicles, comprising a plug element (1) connectable to an energy store of the vehicle via a charging cable, a mating plug element of the charging cable being insertable into the plug element (1) in an open position of a locking element (8) assigned to the plug element (1), and the plug element (1) being arranged inaccessibly in a housing (6) of the charging station in a closed position of the locking element (8), comprising a connecting line (2) connecting the plug element (1) and a supply line (3), comprising a safety switch element (4) which is assigned to the connecting line (2) and which, in a monitoring switch state thereof, detects a fault current in the connecting line (2), and which, in an interrupting switch state, disconnects the connecting line (2), and comprising a further switch element (5) assigned to the connecting line (2), a charging voltage being applied to the plug element (1) in an on state of the further switch element (5) and the plug element (1) being potential-free in an off state of the further switch element (5), **characterised in that** initially the mating plug element is withdrawn from the plug element (1) and subsequently the automatic restart is performed, **in that** for automatically readying the charging station for operation again after a fault in the closed position of the locking element (8) the further switching element (5) is brought from the off state thereof into the on state, **in that** the safety switch element (4) is brought from the interrupting switch state thereof into the monitoring switch state by means of an actuation unit (13), and **in that**, if the safety switch element (4) remains in the monitoring switch state, the further switching element (5) is brought into the off state.

8. Method according to claim 7, **characterised in that** initially the further switching element (5) is brought from the off state thereof into the on state, and **in that** subsequently the safety switch element (4) is brought from the interrupting switch state into the monitoring switch state.

9. Method according to either claim 7 or claim 8, **characterised in that** the closed position of the locking element (8) is detected by sensor, and a sensor signal denoting the closed position is fed to a control unit (11) controlling the actuation unit (13).

10. Method according to any of claims 7 to 9, **characterised in that** a message concerning the failed restart is sent to an operator of the charging station or the failure of the charging station is reported to the charging station itself if the safety switch element (4), after being brought from the interrupting switch state into the monitoring switch state, does not remain in the monitoring switch state.

11. Method according to any of claims 7 to 10, **characterised in that** the charging station or a plug element (1) assigned to the safety switch element (4) is taken out of operation if the safety switch element (4), after being brought from the interrupting switch state into the monitoring switch state, does not remain in the monitoring switch state.

## Revendications

1. Dispositif pour fournir de l'énergie électrique pour des véhicules à propulsion électrique, comportant un élément enfichable (1) pouvant être relié à un accumulateur d'énergie du véhicule par un câble de charge, comportant une ligne de raccordement (2) reliant l'élément enfichable (1) et une ligne d'alimentation externe (3), comportant un élément de commutation de protection (4) associé à la ligne de raccordement (2), l'apparition d'un courant de défaut dans la ligne de raccordement (2) pouvant être détectée dans une position de commutation de surveillance de l'élément de commutation de protection (4) et la ligne de raccordement (2) étant coupée dans une position de commutation d'interruption de celui-ci, comportant un autre élément de commutation (5) associé à la ligne de raccordement (2), une tension de charge étant appliquée à l'élément enfichable (1) dans une position d'activation de l'autre élément de commutation (5) et l'élément enfichable (1) étant hors tension dans une position de désactivation de l'autre élément de commutation (5), comportant un boîtier (6) qui entoure au moins par sections l'élément enfichable (1), le câble de raccordement (2), l'élément de commutation de protection (4) et l'autre élément de commutation (5) et qui présente un évidement (7) et un élément de fermeture (8) associé à l'évidement (7), l'élément de fermeture (8) fermant complètement l'évidement (7) dans une position de fermeture de telle sorte que l'élément enfichable (1) est disposé de manière inaccessible dans le boîtier (6), une unité de détection (9) étant associée à l'élément de fermeture (8) pour détecter la position fermée de l'élément de fermeture (8), et, dans une position ouverte de l'élément de fermeture (8), l'élément enfichable (1) étant disposé de manière accessible dans le boîtier (6) à travers l'évidement (7), **caractérisé en ce qu'**une unité d'actionnement électrique (13) est associée à l'élément de commutation de protection (4) pour amener l'élément de commutation de protection (4) dans la position de commutation de surveillance, qu'il est prévu une unité de commande (11) coopérant du point de vue des données avec l'unité de détection (9), avec l'unité d'actionnement électrique (13) et avec l'autre élément de commutation (5), l'unité de commande (11) étant reliée par une ligne de données (10) à l'unité de détection (9) et coopérant par une autre ligne de données (12) avec l'unité d'actionnement (13) pour actionner l'élément de commutation de protection (4), et que le dispositif est conçu pour mettre en oeuvre un procédé selon l'une des revendications 7 à 11.

2. Dispositif selon la revendication 1, **caractérisé en ce que** l'élément de fermeture (8) est conçu comme un élément de fermeture (8) pouvant être actionné manuellement et/ou que l'élément de fermeture (8) peut être immobilisé dans la position fermée au moyen d'une unité de verrouillage.

3. Dispositif selon la revendication 1 ou 2, **caractérisé en ce que** l'élément de fermeture (8) est conçu comme un élément de fermeture (8) pouvant être actionné par un moteur.

4. Dispositif selon l'une des revendications 1 à 3, **caractérisé en ce que** l'élément enfichable (1) est monté coulissant dans le boîtier (6) et un mouvement de l'élément enfichable (1) est couplé à un mouvement de l'élément de fermeture (8) de telle sorte que, dans une position de fourniture de l'élément enfichable (1), un élément enfichable complémentaire du câble de charge peut être inséré dans l'élément enfichable (1) à travers l'évidement (7) du boîtier (6), et que, dans une position de non-fourniture de l'élément enfichable, l'élément enfichable (1) est disposé de manière inaccessible dans le boîtier (6) et l'évidement (7) est fermé par l'élément de fermeture (8).

5. Dispositif selon l'une des revendications 1 à 4, **caractérisé en ce que** l'unité de détection (9) présente un capteur optique et/ou un capteur de proximité et/ou un capteur sensible au toucher.

6. Dispositif selon l'une des revendications 1 à 5, **caractérisé en ce que** l'autre élément de commutation (5) est associé au câble de raccordement (2) entre l'élément enfichable (1) et l'élément de commutation de protection (4).

7. Procédé de remise en service automatique d'une station de charge fournissant de l'énergie électrique pour des véhicules à propulsion électrique, comportant un élément enfichable (1) pouvant être relié par un câble de charge à un accumulateur d'énergie du véhicule, un élément enfichable complémentaire du câble de charge pouvant être inséré dans l'élément enfichable (1) dans une position ouverte d'un élément de fermeture (8) associé à l'élément enfichable (1), et l'élément enfichable (1) étant disposé de manière inaccessible dans un boîtier (6) de la station de charge dans une position fermée de l'élément de fermeture (8), comportant une ligne de raccordement (2) reliant l'élément enfichable (1) et une ligne d'alimentation (3), comportant un élément de commutation de protection (4) associé à la ligne de raccordement (2), qui, dans une position de commutation de surveillance de celui-ci, détecte un courant de défaut dans la ligne de raccordement (2) et qui, dans une position de commutation d'interruption, coupe la ligne de raccordement (2), et comportant un autre élément de commutation (5) associé à la ligne de raccordement (2), une tension de charge étant appliquée à l'élément enfichable (1) dans une position d'activation de l'autre élément de commutation (5) et l'élément enfichable (1) étant hors tension dans une position de désactivation de l'autre élément de commutation (5), **caractérisé en ce que** l'élément enfichable complémentaire est d'abord retiré de l'élément enfichable (1) et la remise en service automatique est ensuite effectuée, que, pour le rétablissement automatique de la disponibilité de la station de charge après un cas de défaut dans la position fermée de l'élément de fermeture (8), l'autre élément de commutation (5) est amené de la position de désactivation de celui-ci dans la position d'activation, que l'élément de commutation de protection (4) est amené au moyen d'une unité d'actionnement (13) de la position de commutation d'interruption dans la position de commutation de surveillance et que, dans la mesure où l'élément de commutation de protection (4) reste dans la position de commutation de surveillance, l'autre élément de commutation (5) est ensuite amené dans la position de désactivation.

8. Procédé selon la revendication 7, **caractérisé en ce que** l'autre élément de commutation (5) est d'abord amené de la position de désactivation de celui-ci dans la position d'activation et que l'élément de commutation de protection (4) est ensuite amené de la position de commutation d'interruption dans la position de commutation de surveillance.

9. Procédé selon la revendication 7 ou 8, **caractérisé en ce que** la position fermée de l'élément de fermeture (8) est détectée par un capteur et qu'un signal de capteur caractérisant la position fermée est amené à une unité de commande (11) commandant l'unité d'actionnement (13).

10. Procédé selon l'une des revendications 7 à 9, **caractérisé en ce qu'**un message indiquant l'échec de la remise en service est envoyé à un exploitant de la station de charge ou que la défaillance de la station de charge est indiquée sur la station de charge elle-même, dans la mesure où l'élément de commutation de protection (4) ne reste pas dans la position de commutation de surveillance après l'amenée de celui-ci de la position de commutation d'interruption dans la position de commutation de surveillance.

11. Procédé selon l'une des revendications 7 à 10, **caractérisé en ce que** la station de charge ou un élément enfichable (1) associé à l'élément de commutation de protection (4) est mis(e) hors service dans la mesure où l'élément de commutation de protection (4) ne reste pas dans la position de commutation de surveillance après l'amenée de celui-ci de la position de commutation d'interruption dans la position de commutation de surveillance.
